# EUROPÄISCHE PATENTSCHRIFT

(11) **EP 1 434 713 B1**
(45) Veröffentlichungstag und Bekanntmachung des Hinweises auf die Patenterteilung: **09.03.2005**
(21) Anmeldenummer: 02774140.4
(22) Anmeldetag: 16.09.2002
(51) Int. Cl.: B64D 11/00, B60R 5/00, B61D 37/00

(54) **ÜBERKOPF-GEPÄCKABLAGEBEHÄLTER, INSBESONDERE FÜR FLUGZEUGE**
OVERHEAD LUGGAGE CONTAINER, PARTICULARLY FOR AIRPLANES
COMPARTIMENT A BAGAGES INSTALLE AU-DESSUS DE LA HAUTEUR DE LA TETE, DESTINE NOTAMMENT A DES AVIONS

(30) Priorität: 09.10.2001 AT 15902001
(43) Veröffentlichungstag der Anmeldung: 07.07.2004
(73) Patentinhaber: Fischer Advanced Composite Components AG, 4910 Ried im Innkreis (AT)
(72) Erfinder: STEPHAN, Walter, A., A-4973 St. Martin (AT); FILSEGGER, Hermann, A-4910 Ried im Innkreis (AT); PAMMINGER, Erich, A-4984 Weilbach (AT)
(74) Vertreter: Sonn & Partner Patentanwälte
(86) Internationale Anmeldenummer: PCT/AT2002/000267
(87) Internationale Veröffentlichungsnummer: WO 2003/031260

(56) Entgegenhaltungen:
- EP-A- 0 557 267
- EP-A- 0 658 644
- EP-A- 0 718 189
- EP-A- 0 767 100
- EP-A- 0 861 781
- DE-U- 20 016 405
- US-A- 4 275 942

## Beschreibung

Die Erfindung betrifft eine Überkopf-Gepäckablage, insbesondere für Flugzeuge, mit zumindest einer mit dem Behälter verbundenen Versteifungsstruktur, welche im Wesentlichen in Richtung der Längsausdehnung des Behälters angeordnet ist, und zumindest einer Vorrichtung zur Aufhängung an einer Tragstruktur des Flugzeuges od. dgl.

Überkopf-Gepäckablagen werden insbesondere in Flugzeugen für die Aufbewahrung des Handgepäcks von Passagieren während des Fluges verwendet. Allerdings sind auch Überkopf-Ablagen für andere Transportmittel, wie zum Beispiel schienengebundene Fahrzeuge, vorzugsweise Hochgeschwindigkeitszüge aber auch Autobusse oder Schiffe, von der vorliegenden Erfindung betroffen. Überkopf-Gepäckablagen in Flugzeugen sind insbesondere während der Start- und Landephase, sowie während des Fluges und in Notfällen sehr hohen mechanischen Belastungen ausgeliefert, weshalb Überkopf-Gepäckablagen für Flugzeuge für besonders hohe Belastungen ausgelegt sein müssen. Diese hohen Anforderungen an Gepäckablagebehälter erhöhen den Herstellungsaufwand drastisch und sind meist auch mit einer Erhöhung des Eigengewichts verbunden.

Überkopf-Gepäckablagen, insbesondere für Flugzeuge, werden heutzutage meist aus Kunststoffmaterial in Sandwichbauweise hergestellt, wobei der Kern in der Regel aus einem Wabenbaustoff gebildet ist und von Deckschichten aus Kunststoff, der mit Glasfasern oder Kohlenstofffasern verstärkt werden kann, abgedeckt ist. Die Überkopf-Gepäckablage können aus einer Ummulde aufgebaut werden, welche aus einem oben beschriebenen Material durch mehrfaches Biegen oder Knicken hergestellt wird. Der Behälter kann auch durch Aushärten von Prepreg-Schichten, welche auf einer Form angeordnet werden in einem Autoklaven hergestellt werden. Zudem umfasst die Ablage meist eine Öffnung, die vorteilhafter weise durch Klappen verschlossen werden kann. Beispielsweise beschreibt die EP 0 557 267 B1 eine solche Überkopf-Gepäckablage und ein verfahren zur Herstellung derselben. Da die im Wesentlichen vertikalen Seitenwände der Gepäckablage einer hohen Belastung durch vertikal gerichtete Kräfte ausgesetzt sind, müssen diese Seitenwände und deren Verbindung mit der Ummulde der Gepäckablage besonders stabil und aufwendig hergestellt werden. Dies erhöht einerseits das Gewicht der Gepäckablage und andererseits die Herstellungskosten.

Auch die EP 0 658 644 A2 beschreibt eine Überkopf-Gepäckablage, welche aus Bauteilen hergestellt ist, die besonders niedriges Gewicht bei gleichzeitig hoher Stabilität aufweisen.

Die EP 718 189 A1 zeigt eine Überkopf-Gepäckablage mit höherer Ladekapazität, welche zum Nachrüsten bestehender Flugzeuge gedacht ist und somit kompatibel mit existierenden Aufhängevorrichtungen für Überkopf-Gepäckablagen ist. Die Überkopf-Gepäckablagen gemäß diesem Dokument sind allerdings nicht speziell für die höheren statischen Belastungen der darin befindlichen Gepäckstücke ausgelegt.

Überkopf-Gepäckablagen, insbesondere für Flugzeuge, für Gepäck der Passagiere od. dgl., sind üblicherweise mechanisch für zwei Situationen ausgelegt. Die eine Situation wird durch den normalen, regulären Flugbetrieb gebildet, in dem die Ablage bestimmte Belastungen, beispielsweise durch Luftböen, insbesondere während des Starts und der Landungen, ohne Beschädigungen überstehen sollen. Im Falle des Starts, der Landung oder von Luftböen entsteht durch die Trägheit der in der Gepäckablage befindlichen Last eine Beschleunigung, welche beispielsweise sechsmal so hoch wie die Erdbeschleunigung sein kann. Derartige Werte sind insbesondere im Heck oder in der Front von Flugzeugen üblich. Der zweite Belastungsfall wird durch einen Notfall gebildet, der beispielsweise bei einer Not- oder Bruchlandung des Flugzeugs eintreten kann. Um in einem solchen Fall die Sicherheit der Passagiere gewährleisten zu können, werden die Gepäckablagen überlicherweise auf das Eineinhalbfache der normalen Belastung, also beispielsweise für Belastungen in Größe der neunfachen Erdbeschleunigung, ausgelegt. Diese hohen Belastungen erfordern einen besonders hohen Herstellungsaufwand der Gepäckablagen, insbesondere bei den Seitenwänden und deren Verbindungen mit der Ummulde der Überkopf-Gepäckablage.

Heutzutage werden immer mehr und immer schwerere Gepäckstücke, beispielsweise Handkoffer, Notebooks, Foto- und Videoausrüstungen etc., als Handgepäck in die Flugzeugkabine mitgenommen. Die zulässige Gesamtbelastung der Gepäckablagen wird in der Praxis häufig überschritten. Im Ernstfall, beispielsweise bei einer Notlandung, können die in der Ablage befindlichen Gepäckstücke eine Gefahr für die Passagiere darstellen. Zur Verstärkung der Bodenplatte der Überkopf-Gepäckablage werden meist Versteifungsstrukturen, insbesondere in Form von Profilen an der Bodenplatte, befestigt, welche gleichzeitig beispielsweise zur Aufhängung von über den Sitzreihen der Passagiere befindlichen Einrichtungen wie Lüftung, Sauerstoffversorgung und Beleuchtung dienen. Somit wird die Bodenplatte der Überkopf-Gepäckablage zwar durch die versteifungsstrukturen verstärkt, allerdings gelangen die auftretenden Kräfte in die Seitenwände der Ablage und von dort in die Aufhängevorrichtungen und weiter in die Tragstruktur des Flugzeuges od. dgl. Dabei kann es zu einer Zerstörung der Seitenwände und somit zu einem Öffnen der Überkopf-Gepäckablagen und einem Herabfallen der Gepäckstücke oder zu einem Ausreißen der Aufhängevorrichtung an der Tragstruktur des Flugzeuges kommen.

Zur Sicherung der Überkopf-Gepäckablagen vor Herabfallen sind Sicherheitsvorrichtungen, beispielsweise in Form von flexiblen Kraftumlenkungselementen, welche auch Einrichtungen zur Vernichtung von Bewegungsenergie enthalten, bekannt, die auch nach dem Abreißen der Aufhängevorrichtung die Überkopf-Gepäckablage an der Tragstruktur des Flugzeuges od. dgl. festhalten. Eine derartige Sicherheitsvorrichtung ist beispielsweise in der EP 0 767 100 A1 beschrieben.

Einen Überkopf-Gepäckablagebehälter der gegenständlichen Art beschreibt die EP 0 861 781 A2, wobei der Behälter zur raschen Umrüstung eines Flugzeuges vom Frachtbetrieb zu Passagiertransportbetrieb und umgekehrt entsprechend ausgestaltet ist. Zu diesem Zweck beinhaltet der Überkopf-Gepäckablagebehälter an der Rückseite Haken, welche in entsprechende Klammern am Flugzeugrumpf eingehängt werden können. Die weitere Fixierung des Überkopf-Gepäckablagebehälters erfolgt über Zugstangen, welche mit Verbindungselementen, die an der Bodenplatte des Überkopf-Gepäckablagebehälters befestigt sind, verbunden werden. Die Verbindung der Zugstangen mit den Verbindungselementen erfolgt in herkömmlicher Art und Weise über Bolzen und Schrauben. Im Falle einer Überbelastung des Gepäckablagebehälters würden die an der Bodenplatte befestigten Verbindungselemente ausreißen und die Bodenplatte zusammen mit den darin befindlichen Gepäckstücken auf die Köpfe der unter der Gepäckablage sitzenden Passagiere fallen. Um dies zu verhindern, muss die Bodenplatte entsprechend stabil hergestellt werden, wodurch wiederum die Kosten zur Herstellung der Gepäckablage und auch das Gewicht erhöht würden.

Die DE 200 16 405 U1 betrifft ein Gepäckfach eines Fahrzeuges, welches eine möglichst einfache und kostengünstige Bewegung der Gepäckfachklappe zulässt. Zu diesem Zweck sind in den Seitenwänden der Gepäckablage Nuten angeordnet, entlang derer die Gepäckfachklappe von der geschlossenen in die geöffnete Stellung verschoben werden kann. Im Falle einer Überbeladung dieses Behälters würden die Bodenplatten oder die Seitenwände zerstört und die Gepäckstücke auf die Köpfe der unter der Gepäckablage befindlichen Passagiere fallen.

Die EP 0 557 267 A1 betrifft einen Überkopf-Gepäckablagebehälter für Flugzeuge, welcher möglichst einfach hergestellt werden kann, möglichst geringes Eigengewicht aufweist und möglichst hohen Belastungen widersteht. Zu diesem Zweck wird der Behälter aus einem in Sandwichbauweise gefertigten Verbundbauteil vorzugsweise aus Glasfaser- oder Kohlenfaserverbundwerkstoff aufgebaut. Die Verbindung der Seitenwände mit der Mulde ist zur Erzielung einer stabilen Gepäckablage jedoch relativ aufwendig.

Die Aufgabe der vorliegenden Erfindung besteht in der Schaffung einer Überkopf-Gepäckablage, insbesondere für Flugzeuge, die den statischen Belastungen durch die darin befindlichen Gepäckstücke standhält, so dass somit keine Gefahr für die unter der Gepäckablage sitzenden Passagiere verbunden ist. Weiters soll die Überkopf-Gepäckablage möglichst rasch und einfach sowie kostengünstig herstellbar sein und ein möglichst geringes Gewicht aufweisen. Das geringe Gewicht ist bei Luftfahrzeugen wegen des Treibstoffverbrauchs besonders relevant.

Gelöst wird die erfindungsgemäße Aufgabe dadurch, dass zwischen der Versteifungsstruktur und der Aufhängevorrichtung seitlich des Behälters jeweils zumindest ein steifes Verbindungselement in Bezug auf die Längsausdehnung des Behälters im Wesentlichen vertikal angeordnet ist, wobei das Verbindungselement formschlüssig mit der Versteifungsstruktur und mit der Aufhängevorrichtung verbunden ist. Das erfindungsgemäße steife Verbindungselement dient als Kraftumlenkungselement vom Boden des Behälters über die Versteifungsstruktur bzw. die Versteifungsstrukturen zur Aufhängevorrichtung bzw. zu den Aufhängevorrichtungen, wodurch die Überkopf-Gepäckablage, insbesondere deren Seitenwände, entlastet werden und somit einfacher und kostengünstiger hergestellt werden können. Insbesondere werden dadurch keine hohen Anforderungen an die Verbindungen zwischen den Seitenwänden der Überkopf-Gepäckablage und den übrigen Behälterkörper gestellt. Unter steifen Verbindungselementen sind Verbindungselemente aus Materialien zu verstehen, welche bei Belastungen unter Normalbedingungen keine relevanten Formveränderungen erfahren. Durch die zwischen den Versteifungsstrukturen und den Aufhängevorrichtungen angeordneten steifen Verbindungselementen können die Überkopf-Gepäckablagen höheren statischen Belastungen standhalten. Andererseits werden geringere Anforderungen an die Fertigung und Montage der Überkopf-Gepäckablage gestellt. Durch den Formschluss wird eine Kraftübertragung vom Behälter über die Versteifungsstrukturen in das im Wesentlichen vertikal angeordnete Verbindungselement und von dort weiter in die Aufhängevorrichtung und in die Tragstruktur des Flugzeuges od. dgl. gewährleistet. Die Anzahl der Verbindungselemente wird an die maximal auftretenden Belastungswerte angepasst. Es wird somit die statische Belastung von der Überkopf-Gepäckablage selbst in die Versteifungsstrukturen und die Verbindungselemente ausgelagert. Dadurch werden die unter der Überkopf-Gepäckablage befindlichen Passagiere od. dgl. vor herabstürzenden Ablagen oder Gepäckstücken, insbesondere in Extremsituationen, geschützt. Unter dem Begriff "im Wesentlichen vertikal" sind Winkelbereiche von ± 5° zur Vertikalen in Bezug auf die Längsausrichtung des Überkopf-Gepäckablagebehälters zu verstehen. Zur weiteren Erhöhung der Sicherheit, beispielsweise bei dynamischen Belastungen in Extremsituationen, können natürlich Sicherheitsvorrichtungen, beispielsweise wie oben beschrieben, in Form von Gurten od. dgl., angewendet werden. Die Erfindung ist sowohl auf feststehende Überkopf-Gepäckablagebehälter als auch verschwenkbar bzw. verschiebbar angeordnete Behälter anwendbar. Bei den verschwenkbar angeordneten Überkopf-Abgabebehältern kann das steife Verbindungselement sowohl seitlich des beweglichen Behälterteils als auch seitlich des mit dem beweglichen Behälterteils allenfalls verbundenen feststehenden Behälterteils angeordnet werden.

Während der Überkopf-Gepäckablagebehälter durch ein offenes Ablagefach gebildet sein kann, beinhaltet der Behälter vorteilhafterweise einen feststehenden Teil und einen mit diesem beweglich verbundenen Teil.

Dieser bewegliche Behälterteil kann durch eine gelenkig mit dem festen Behälterteil verbundene Tür gebildet sein. Eine derartige Ausführungsform ist bei Überkopf-Gepäckablagebehältern in Flugzeugen üblich.

Alternativ dazu kann der bewegliche Behälterteil durch eine das Gepäck aufnehmende Mulde gebildet sein, welche beweglich mit dem festen Behälterteil verbunden ist. Derartige Überkopf-Gepäckablagebehälter kommen insbesondere in großen Passagierflugzeugen immer mehr zur Anwendung, da sie ein Verstauen des Gepäcks durch ein nach unten Schwenken oder Verschieben des Behälters wesentlich erleichtern.

Die Bewegung der Mulde gegenüber dem festen Behälterteil kann durch ein Gelenk realisiert sein, welches eine Verschwenkung der Mulde gegenüber dem festen Behälterteil zulässt oder durch einen Verschiebemechanismus, der eine Verschiebung der Mulde gegenüber dem festen Behälterteil ermöglicht.

Das Gelenk oder der Verschiebemechanismus des beweglichen Behälterteils ist vorzugsweise mit der Aufhängevorrichtung verbunden.

Gemäß einem weiteren Merkmal der Erfindung ist vorgesehen, dass die Mulde zumindest eine Versteifungsstruktur enthält, und dass zwischen einer Versteifungsstruktur und dem Gelenk oder dem Verschiebemechanismus zumindest ein steifes Verbindungselement in Bezug auf die Längsausdehnung des Behälters im Wesentlichen vertikal angeordnet ist. Demnach ist.der durch eine Mulde gebildete bewegliche Behälterteil in gleicher Weise wie ein feststehender Überkopf-Gepäckablagebehälter mit dem erfindungsgemäßen steifen Verbindungselement ausgestattet, wodurch die statischen Belastungen aus den Seitenwänden der Mulde über das Verbindungselement und das Gelenk oder den Verschiebemechanismus in die Aufhängevorrichtung und weiter in die Tragstruktur des Flugzeugs od. dgl. weitergeleitet werden.

Üblicherweise ist zur Bildung der Versteifungsstruktur zumindest ein in Längsrichtung des Behälters angeordneter und seitlich des Behälters vorstehender Träger vorgesehen. Da diese Träger hohen Biegebeanspruchungen ausgesetzt sind, werden sie häufig in Form von Profilen, beispielsweise aus Leichtmetall, wie Aluminium, hergestellt. Die Versteifungsstrukturen können jedoch auch andere Form aufweisen und aus anderen Materialien hergestellt sein. Die Träger sind in der Regel mit der Unterseite des Behälters verbunden, beispielsweise verklebt oder verschraubt. Neben einer Versteifung des Behälters erfüllen diese Strukturen auch die Funktion einer Kraftaufnahme und Kraftumlenkung.

Zur formschlüssigen Verbindung des Verbindungselements weist dieses gemäß einem weiteren Merkmal der Erfindung Öffnungen auf, in welche die Enden der Versteifungsstruktur und der Aufhängevorrichtungen einsteckbar sind. Zur formschlüssigen Verbindung zwischen dem Verbindungselement und der Versteifungsstruktur und den Aufhängevorrichtungen genügt ein Einstecken der Versteifungsstruktur bzw. Aufhängevorrichtung in die entsprechenden Öffnungen der Verbindungselemente. Die sowohl in vertikaler als auch horizontaler Richtung auftretenden Kräfte werden über die Verbindungselemente übertragen. Zusätzlich können natürlich Befestigungsmittel, wie Schrauben od. dgl., verwendet werden und somit eine kraftschlüssige Verbindung zwischen dem Verbindungselement und den Trägern und Aufhängevorrichtungen stattfinden. Eine lösbare Verbindung weist jedoch den Vorteil auf, dass die Montage und Demontage wesentlich rascher und einfacher möglich ist und beispielsweise ein Flugzeug od. dgl. rascher umgerüstet, beispielsweise von einem Passagierflugzeug in ein Frachtflugzeug, werden kann.

Die Versteifungsstrukturen müssen nicht durch gesonderte Bauteile realisiert sein, sondern können auch durch einen Teil des Behälters selbst, beispielsweise eine verstärkt ausgeführte Bodenplatte, gebildet sein.

Zur Reduktion des Gewichts des Verbindungselements kann dieses Löcher, Ausnehmungen od. dgl. aufweisen. Diese Löcher, Ausnehmungen od. dgl. sind vorzugsweise an Stellen angeordnet, an welchen die auftretenden Kräfte minimal sind.

Um ein Verrutschen des Überkopf-Gepäckablagebehälters in Bezug auf die Verbindungselemente zu verhindern, können die Verbindungselemente mit Seitenwänden des feststehenden Behälterteiles oder des durch eine Mulde gebildeten beweglichen Behälterteiles verbunden, beispielsweise verklebt oder verschraubt, werden. Dadurch wird zwar der Montageaufwand erhöht, allerdings ein Verrutschen auch in einer Richtung in der Vertikalebene zur Längsausdehnung des Behälters verhindert.

Die Seitenwände bestehen vorzugsweise aus faserverstärkten Verbundkunststoffen in Sandwichbauweise mit einem Kern aus Wabenbaustoff.

Die Seitenwände des Behälters sind vorzugsweise mit dem feststehenden Behälterteil oder den durch eine Mulde gebildeten beweglichen Behälterteil verklebt, wobei keine hohen Anforderungen an die Verbindung gestellt werden. Beispielsweise können die Seitenwände ebenso wie die Behälterteile aus Kunststoffen in Sandwichbauweise hergestellt sein und durch einfache Klebeverbindungen miteinander verbunden werden. Aufwendige Verbindungen zwischen den Seitenwänden und den Behälterteilen über zusätzliche überlappende, glasfaserverstärkte Kunststofflagen sind nicht erforderlich. Dadurch können die Herstellungskosten und auch das Gewicht der Überkopf-Gepäckablagebehälter drastisch reduziert werden.

Ebenso ist es möglich, dass das Verbindungselement und die Versteifungsstruktur einstückig hergestellt sind. Dadurch wird eine Struktur gebildet, auf die der Überkopf-Gepäckablagebehälter mehr oder weniger aufgelegt wird und gegen seitliches Verrutschen durch Verbindung der Versteifungsstruktur beispielsweise mit der Bodenplatte des Behälters gesichert wird.

Die Verbindungselemente können aus Metall, vorzugsweise Leichtmetall, Kunststoff, insbesondere faserverstärktem Kunststoff, oder durch Harzinjektionsverfahren hergestelltem Kunststoff gebildet sein. Als Kunststoffe eignen sich verschiedenste Thermoplaste oder Duroplaste, welche mit Glas- oder Kohlenstofffasern verstärkt werden können. Das Material wird entsprechend den jeweiligen Anforderungen gewählt.

Um bei Extremsituationen, beispielsweise Notlandungen von Flugzeugen, eine unkontrollierte Reaktion der Überkopf-Gepäckablagebhälter zu vermeiden, kann das Versteifungselement Sollbruchstellen beinhalten und mit den Enden der Sollbruchstellen Einrichtungen zur Vernichtung von Bewegungsenergie verbunden sein. Dadurch wird ein gezieltes Zerstören der Versteifungselemente bei Überschreitung der Belastung erreicht und ein Herabfallen des Überkopf-Gepäckablagebehälters durch die Einrichtung zur Vernichtung von Bewegungsenergie vermieden. Die Bewegungsenergie kann beispielsweise durch einen in Schlaufen gelegten Gurt oder durch ein elastisches Element oder durch ein speziell angeordnetes Gewebe realisiert werden.

Zur zusätzlichen Sicherheit kann zwischen der Versteifungsstruktur und der Aufhängevorrichtung zumindest ein flexibler Gurt od. dgl. angeordnet sein, der vorzugsweise eine Einrichtung zur Vernichtung von Bewegungsenergie beinhaltet. Dadurch wird ein Herabfallen der Überkopf-Gepäckablage auch bei Ausreißen der Aufhängevorrichtungen verhindert. Die Einrichtung zur Vernichtung von Bewegungsenergie kann beispielsweise dadurch gebildet werden, dass der Gurt über eine bestimmte Länge in übereinander liegenden Schleifen angeordnet wird, welche durch Nähte fixiert werden. Die Nähte werden dabei so ausgelegt, dass sie bei einer vorbestimmten Belastung aufreißen und somit eine Verlängerung des wirksamen Abschnittes des Sicherheitsgurtes ermöglichen. Dadurch würde die Gepäckablage zwar im Notfall um eine gewisse Länge abgesenkt, jedoch nicht auf die Köpfe der unter der Überkopf-Gepäckablage befindlichen Passagiere herabfallen.

Die Erfindung wird nachstehend anhand von Ausführungsbeispielen unter Bezugnahme auf die Zeichnungen noch weiter erläutert. Darin zeigen:
Fig. 1 schematisch die Anordnung eines Überkopf-Gepäckablagebehälters in einem Flugzeug im Querschnitt durch den Flugzeugrumpf;
Fig. 2 ein Beispiel für ein Herstellungsverfahren eines Überkopf-Gepäckablagebehälters aus wabenverstärkten Verbundwerkstoffen in perspektivischer Ansicht;
Fig. 3 eine Seitenansicht eines erfindungsgemäß ausgeführten Überkopf-Gepäckablagebehälters;
Fig. 4a das Detail IV aus Fig. 3 in Seitenansicht auf den Überkopf-Gepäckablagebehäler;
Fig. 4b eine Seitenansicht des Details aus Fig. 4a;
Fig. 5 eine perspektivische Ansicht einer Variante des erfindungsgemäßen Überkopf-Gepäckablagebehälters mit einstückig ausgebildeter Versteifungsstruktur und Verbindungselement; und
Fig. 6 die Ausführung eines verschwenkbar gelagerten Überkopf-Gepäckablagebehälters.

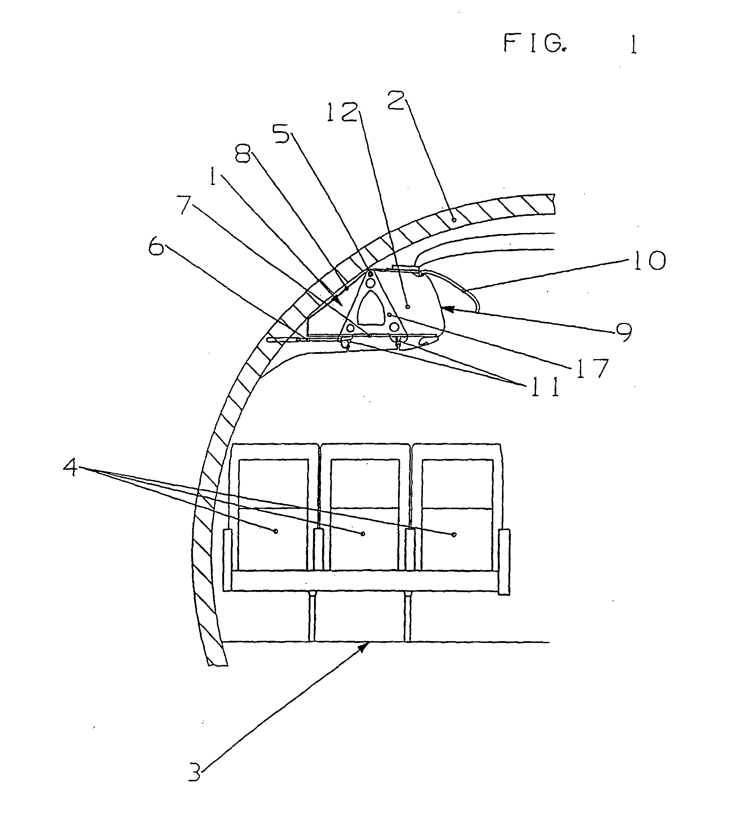

Fig. 1 zeigt die Anordnung eines Überkopf-Gepäckablagebehälters 1 in einem Flugzeug im Querschnitt durch einen Teil des Flugzeugrumpfs 2. Auf dem Boden 3 des Innenraumes eines Passagierflugzeuges sind üblicherweise Sitze 4 befestigt und über den Sitzen 4 die Überkopf-Gepäckablagebehälter 1 angeordnet. Die Behälter 1 werden üblicherweise über Aufhängevorrichtungen 5 mit einer Tragstruktur des Flugzeuges, beispielsweise mit dem Flugzeugrumpf 2, verbunden. Unter den Begriff Tragstruktur fallen auch alle Elemente, welche direkt an die festen Strukturen, wie zum Beispiel den Flugzeugrumpf 2 anschließen. Zusätzlich kann eine weitere Verbindung zwischen dem Überkopf-Gepäckablagebehälter 1 und dem Flugzeugrumpf 2 durch eine Abstützung 6 erfolgen.

Der Überkopf-Gepäckablagebehälter 1 besteht üblicherweise aus einem feststehenden Behälterteil 8, der eine Bodenplatte 7, eine Rückwand, die Oberseite und zumindest einen Teil der Vorderseite beinhaltet. Der feststehende Behälterteil 8 weist eine Öffnung 9 auf, welche durch eine Klappe 10 verschlossen werden kann. An der Bodenplatte 7 des feststehenden Behälterteils 8 sind Versteifungsstrukturen 11 angeordnet, welche durch Metallträger, die mit der Bodenplatte 7 verbunden, beispielsweise verklebt oder verschraubt, sind, gebildet werden können. An diesen Versteifungsstrukturen 11 sind die verschiedenen Beleuchtungs-, Belüftungs- und Sauerstoffversorgungseinrichtungen über den Köpfen der Passagiere angeordnet. Seitlich weist der feststehende Behälterteil 8 Seitenwände 12 auf. Gepäckstücke, welche sich im Überkopf-Gepäckablagebehälter 1 befinden, üben Kräfte auf die Bodenplatte 7 aus, welche normalerweise über die Seitenwände 12 in die Aufhängevorrichtungen 5 umgelenkt werden. Bei Überschreitung der zulässigen Belastungsgrenzen reißen die Aufhängevorrichtungen 5 oder die Seitenwände 12 aus, und die Überkopf-Gepäckablagebehälter 1 oder darin befindliche Gepäckstücke können auf die Köpfe der Passagiere herabfallen. Aus diesem Grund wird der erfindungsgemäße Überkopf-Gepäckablagebehälter 1 mit einem Verbindungselement 17 zwischen den Versteifungsstrukturen 11 und den Aufhängevorrichtungen 5 versehen, wodurch die Seitenwände 12 entlastet und eine Zerstörung des Behälters 1 vermieden wird.

Die Erfindung ist nicht auf feststehende, wie in Fig. 1 dargestellte Überkopf-Gepäckablagebehälter 1 beschränkt, sondern auch auf neuerdings häufiger zum Einsatz kommende nach unten verschwenkbare oder verschiebbare Überkopf-Gepäckablagebehälter anwendbar.

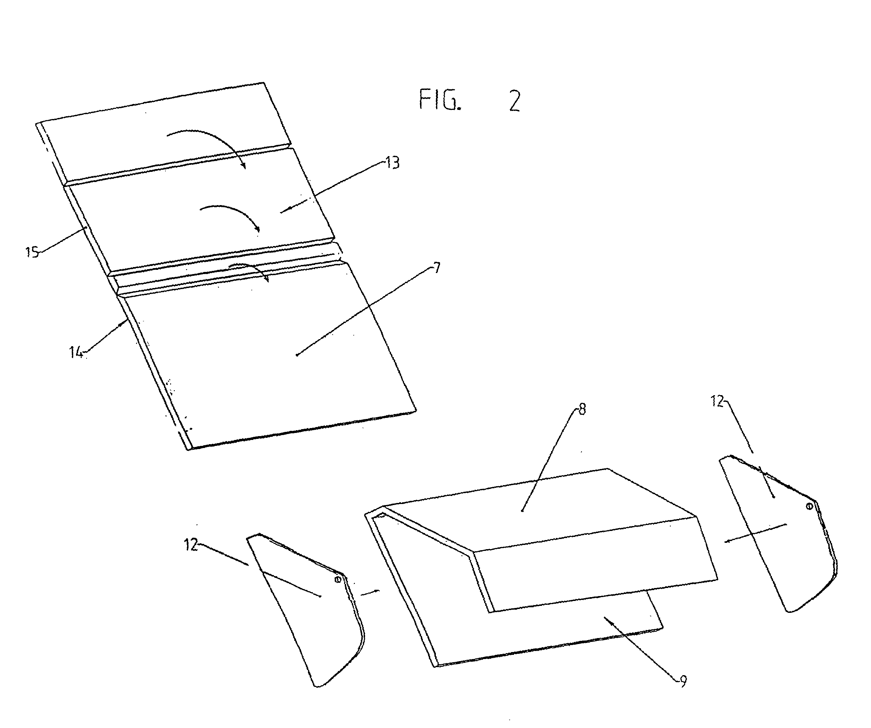

Fig. 2 zeigt eine Möglichkeit der Herstellung eines Überkopf-Gepäckablagebehälters 1 aus einer den feststehenden Behälterteil 8 bildenden Ummulde, die aus Glasfaser- oder Kohlenstofffaserverbundwerkstoff in Sandwichbauweise gefertigt sein kann. Zwischen zwei Lagen 13,14 aus faserverstärktem Kunststoff ist ein wabenkern 15 angeordnet. An den Knickstellen des feststehenden Behälterteils 8 sind keine Wabenkerne 15 vorhanden und die Lagen 13 und 14 aneinander angeordnet. Somit kann der Behälterteil 8 auf eine entsprechend gestaltete Form aufgebracht werden. Die Seitenwände 12 des Behälters 1 werden ebenfalls auf die Form aufgebracht und beispielsweise mit dem Behälterteil 8 verklebt. Die Herstellung kann in einem Autoklaven unter Wärme und Druck erfolgen. Ein derartiger Herstellungsvorgang ist besonders aufwendig, da an die Seitenwände 12 und die Verbindung zwischen den Seitenwänden 12 und dem Behälterteil 8 hohe Anforderungen gestellt werden.

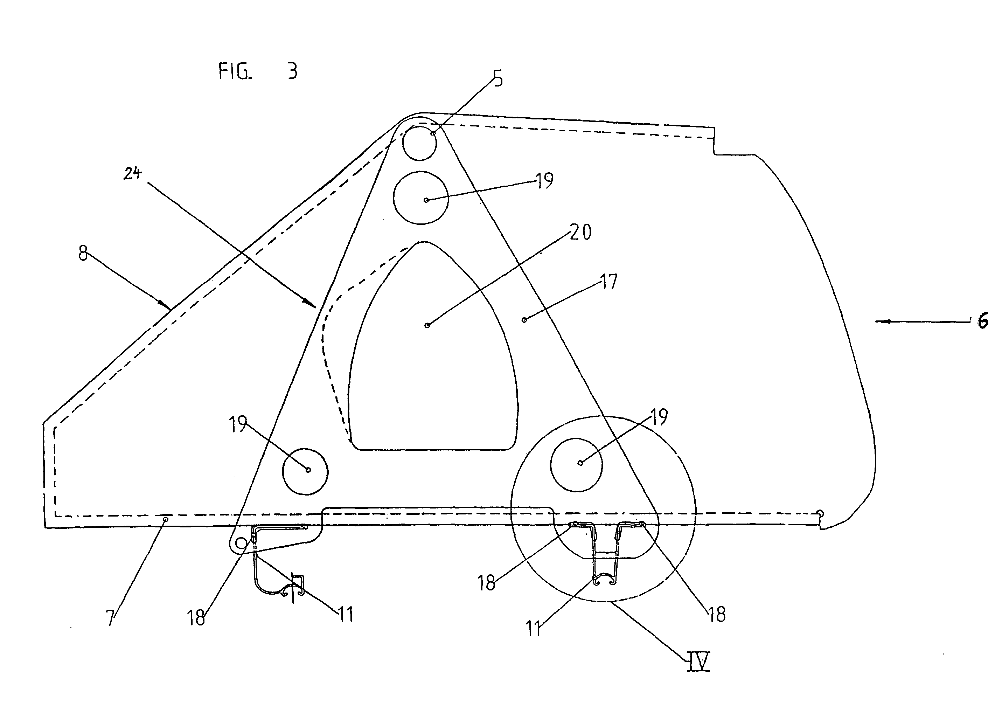

Fig. 3 zeigt einen Überkopf-Gepäckablagebehälter 1 gemäß der vorliegenden Erfindung in Seitenansicht. Der Behälter 1 besteht aus einem feststehenden Behälterteil 8, welcher die Bodenplatte 7 enthält. Über eine Öffnung 9, welche vorzugsweise verschließbar ausgeführt ist, kann das Gepäck in den Behälterteil 8 eingebracht werden. An der Oberseite des Behälterteils 8 ist eine Aufhängevorrichtung 5 angeordnet. Mit der Bodenplatte 7 des Behälterteils 8 sind Versteifungsstrukturen 11 in Form von Strangprofilschienen, vorzugsweise aus Metall, angeordnet. Die Versteifungsstrukturen 11 sind mit der Bodenplatte 7 verbunden, beispielsweise verklebt oder verschraubt. Weiters ist zwischen den Versteifungsstrukturen 11 und der Aufhängevorrichtung 5 an der Seite des Überkopf-Gepäckablagebehälters 1 zumindest eine steifes Verbindungselement 17 angeordnet. Das Verbindungselement 17 weist Öffnungen 18 zur formschlüssigen Verbindung mit den Versteifungsstrukturen 11 und der Aufhängevorrichtung 5 auf. Das Verbindungselement 17 ist so gestaltet, dass der Kraftfluss von den Versteifungsstrukturen 11 an der Bodenplatte 7 des Behälters 1 zu der Aufhängevorrichtung 5 gewährleistet ist. Zur Reduktion des Gewichts können Löcher 19 oder Ausnehmungen 20 im Verbindungselement 17 angeordnet sein. Diese Löcher 19, Ausnehmungen 20 od. dgl. sind an solchen Stellen des Verbindungselements 17 angeordnet, wo die auftretenden Kräfte minimal sind. Das Verbindungselement 17 kann aus Metall, Kunststoff, insbesondere faserverstärktem Kunststoff, hergestellt sein. Um bei Extremsituationen, beispielsweise Notlandungen von Flugzeugen, eine unkontrollierte Reaktion des Überkopf-Gepäckablagebhälters 1 zu vermeiden, kann das Verbindungselement 17 Sollbruchstellen 24, beispielsweise in Form von Verengungen (strichliert dargestellt) beinhalten. Mit den Enden der Sollbruchstellen 24 können Einrichtungen zur Vernichtung von Bewegungsenergie, wie zum Beispiel ein in Schlaufen gelegter Gurt oder ein elastisches Element (nicht dargestellt) verbunden sein.

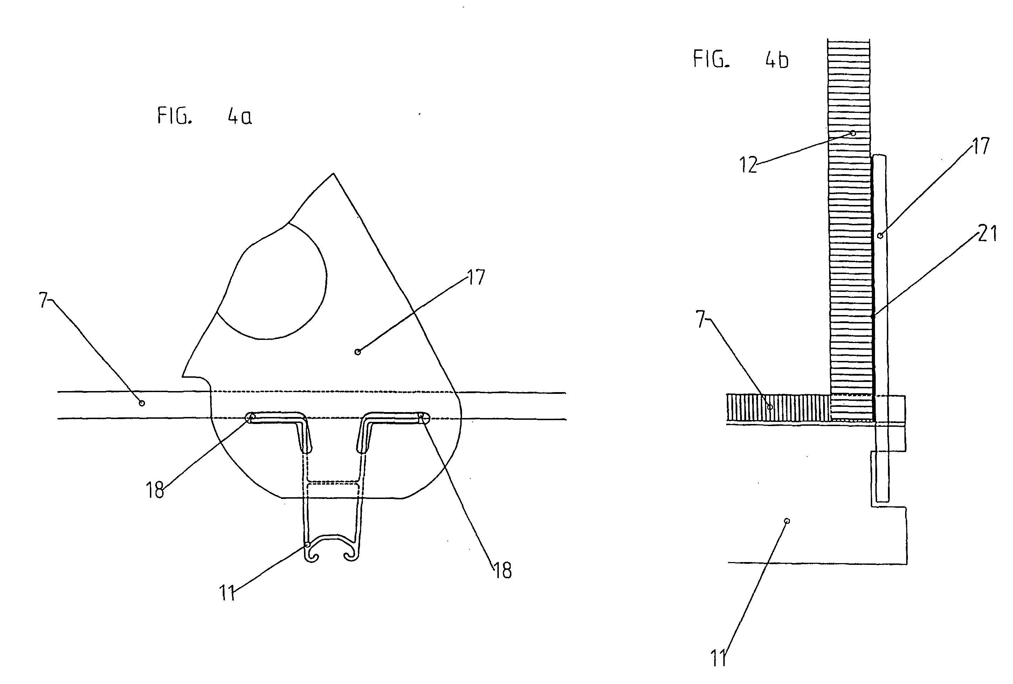

Die Fig. 4a und Fig. 4b zeigen ein Beispiel der Verbindung zwischen dem Verbindungselement 17 und der Versteifungsstruktur 11 im Detail. Zu diesem Zweck sind die Öffnungen 18 im Verbindungselement 17 angeordnet, durch welche die Versteifungsstruktur 11 oder Teile davon gesteckt werden können. Das Ende der Versteifungsstruktur 11, welches durch das Verbindungselement 17 ragt, kann zusätzlich, beispielsweise mit einer Schraube od. dgl. fixiert werden, so dass ein Verrutschen der Versteifungsstruktur 11 gegenüber dem Verbindungselement 17 nicht möglich ist. Zusätzlich kann zwischen der Seitenwand 12 des Behälters 1 und dem Verbindungselement 17 eine Klebeschicht 21 zur Verbindung vorgesehen sein.

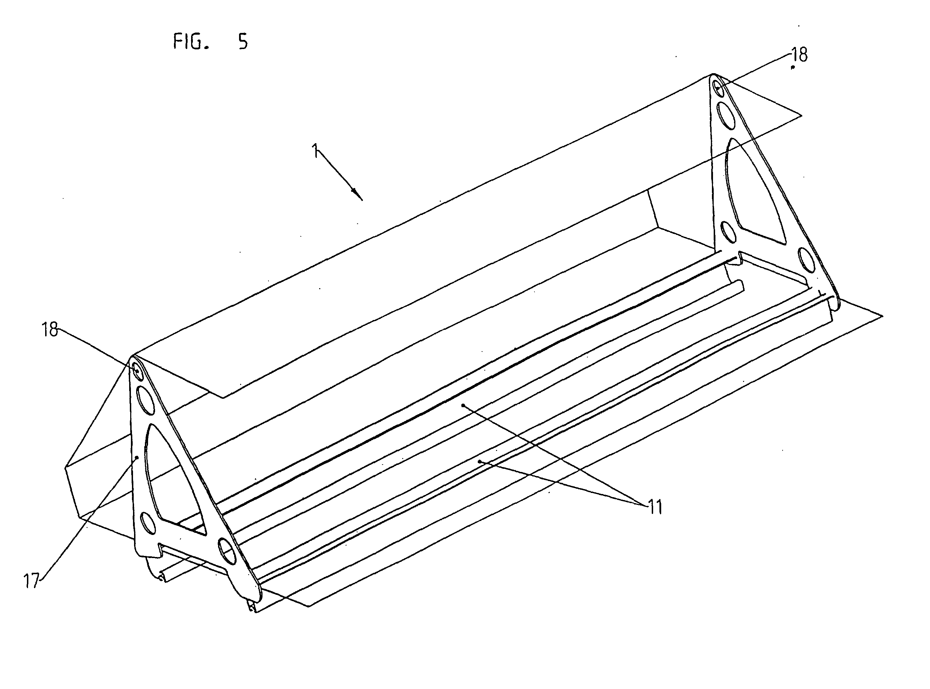

Schließlich zeigt Figur 5 eine Variante der Erfindung, bei der die Versteifungsstrukturen 11 und die Verbindungselemente 17 einstückig herstellt sind. Die Versteifungsstruktur 11 und die Verbindungselemente 17 bilden eine schaukelähnliche Struktur, in der der Überkopf-Gepäckablagebehälter 1 (schematisch dargestellt) angeordnet ist. Die Aufhängevorrichtungen 5 des Überkopf-Gepäckablagebehälters 1 werden durch entsprechende Öffnungen 18 durch die Verbindungselemente 17 gesteckt und mit der Tragstruktur des Flugzeuges verbunden.

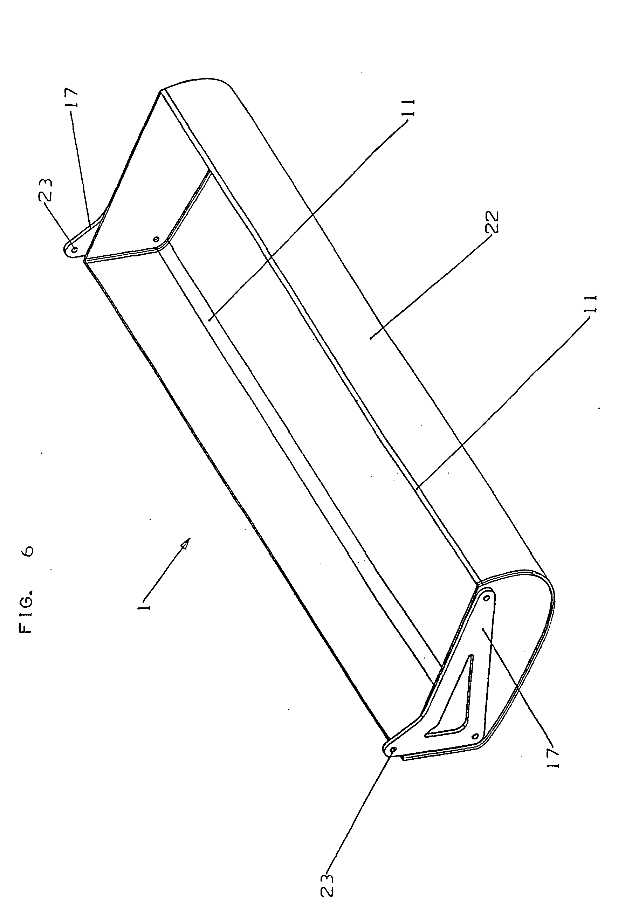

Fig. 6 zeigt eine Variante eines Überkopf-Gepäckablagebhälters 1, der verschwenkbar ist, so dass ein Deponieren von Gepäckstücken, insbesondere in sehr großen Flugzeugen, erleichtert wird. Der Behälter 1 besteht aus einem durch eine Mulde 22 gebildeten beweglichen Teil, der Versteifungsstrukturen 11 beinhaltet. Die Versteifungsstrukturen 11 sind erfindungsgemäß mit Verbindungselementen 17 verbunden, welche im Wesentlichen vertikal in Bezug auf die Längsausdehnung des Behälters 1 angeordnet sind. Über ein Gelenk 23, welches mit der Aufhängevorrichtung 5 (nicht dargestellt) verbunden sein kann, ist die Mulde verschwenkbar mit dem feststehenden Behälterteil (nicht dargestellt) verbunden. Bei der Ausführungsform eines verschwenkbar angeordneten Überkopf-Gepäckablagebehälters 1 kann sowohl der feststehende Behälterteil 8 als auch der durch eine Mulde 22 gebildete bewegliche Behälterteil mit erfindungsgemäßen Verbindungselementen 17 ausgestattet sein.

Der vorliegende Überkopf-Gepäckablagebehälter 1, insbesondere für Flugzeuge, hält höheren Belastungen stand, ohne dass der Herstellungsaufwand für den Überkopf-Gepäckablagebehälters 1 erhöht wird.

## Patentansprüche

1. Überkopf-Gepäckablagebehälter (1), insbesondere für Flugzeuge, mit zumindest einer mit dem Behälter (1) verbundenen Versteifungsstruktur (11), welche im Wesentlichen in Richtung der Längsausdehung des Behälters (1) angeordnet ist, und zumindest einer Vorrichtung (5) zur Aufhängung an einer Tragstruktur (2) des Flugzeuges od. dgl., **dadurch gekennzeichnet, dass** zwischen der Versteifungsstruktur (11) und der Aufhängevorrichtung (5) seitlich des Behälters (1) jeweils zumindest ein steifes Verbindungselement (17) in Bezug auf die Längsausdehnung des Behälters (1) im Wesentlichen vertikal angeordnet ist, wobei das Verbindungselement (17) formschlüssig mit der Versteifungsstruktur (11) und mit der Aufhängevorrichtung (5) verbunden ist.

2. Behälter nach Anspruch 1, **dadurch gekennzeichnet, dass** der Behälter (1) einen feststehenden Teil (8) und einen mit diesem beweglich verbundenen Teil beinhaltet.

3. Behälter nach Anspruch 2, **dadurch gekennzeichnet, dass** der bewegliche Behälterteil durch eine gelenkig mit dem festen Behälterteil (8) verbundene Tür (10) gebildet ist.

4. Behälter nach Anspruch 2, **dadurch gekennzeichnet, dass** der bewegliche Behälterteil durch eine das Gepäck aufnehmende Mulde (22) gebildet ist, welche Mulde (22) beweglich mit dem festen Behälterteil (8) verbunden ist.

5. Behälter nach Anspruch 4, **dadurch gekennzeichnet, dass** die Mulde (22) über ein Gelenk (23) verschwenkbar mit dem festen Behälterteil (8) verbunden ist.

6. Behälter nach Anspruch 4, **dadurch gekennzeichnet, dass** die Mulde (22) über einen Verschiebemechanismus verschiebbar mit dem festen Behälterteil (8) verbunden ist.

7. Behälter nach Anspruch 5 oder 6, **dadurch gekennzeichnet, dass** das Gelenk (23) oder der Verschiebemechanismus mit der Aufhängevorrichtung (5) verbunden ist.

8. Behälter nach Anspruch 5 bis 7, **dadurch gekennzeichnet, dass** die Mulde (22) zumindest eine Versteifungsstruktur (11) enthält, und dass zwischen einer Versteifungsstruktur (11) und dem Gelenk (23) oder dem Verschiebemechanismus zumindest ein steifes Verbindungselement (17) in Bezug auf die Längsausdehnung des Behälters (1) im Wesentlichen vertikal angeordnet ist.

9. Behälter nach einem der Ansprüche 1 bis 8, **dadurch gekennzeichnet, dass** zur Bildung der versteifungsstruktur (11) zumindest ein in Längsrichtung des Behälters (1) angeordneter und seitlich des Behälters (1) vorstehender Träger vorgesehen ist.

10. Behälter nach Anspruch 9, **dadurch gekennzeichnet, dass** das Verbindungselement (17) Öffnungen (18) zur formschlüssigen Verbindung mit den Enden der Versteifungsstruktur (11) und den Aufhängevorrichtungen (5) aufweist.

11. Behälter nach einem der Ansprüche 1 bis 8, **dadurch gekennzeichnet, dass** die versteifungsstruktur (11) durch einen Teil des Behälters (1) gebildet ist.

12. Behälter nach einem der Ansprüche 1 bis 11, **dadurch gekennzeichnet, dass** das Verbindungselement (17) Löcher (19), Ausnehmungen (20) od. dgl. aufweist.

13. Behälter nach einem der Ansprüche 2 bis 12, **dadurch gekennzeichnet, dass** das Verbindungselement (17) mit Seitenwänden (12) des feststehenden Behälterteiles (8) oder des durch eine Mulde (22) gebildeten beweglichen Behälterteiles (1) verbunden, beispielsweise verklebt oder verschraubt, ist.

14. Behälter nach Anspruch 13, **dadurch gekennzeichnet, dass** die Seitenwände (12) aus faserverstärkten Verbundkunststoffen in Sandwichbauweise mit einem Kern (15) aus Wabenbaustoff gebildet sind.

15. Behälter nach Anspruch 14, **dadurch gekennzeichnet, dass** die Seitenwände (12) mit dem feststehenden Behälterteil (8) oder den durch eine Mulde (22) gebildeten beweglichen Behälterteil verklebt sind.

16. Behälter nach einem der Ansprüche 1 bis 15, **dadurch gekennzeichnet, dass** das Verbindungselement (17) und die Versteifungsstruktur (11) einstückig hergestellt sind.

17. Behälter nach einem der Ansprüche 1 bis 16, **dadurch gekennzeichnet, dass** das Verbindungselement (17) aus Metall hergestellt ist.

18. Behälter nach einem der Ansprüche 1 bis 16, **dadurch gekennzeichnet, dass** das Verbindungselement (17) aus Kunststoff, insbesondere faserverstärktem Kunststoff, hergestellt ist.

19. Behälter nach einem der Ansprüche 1 bis 18, **dadurch gekennzeichnet, dass** das Versteifungselement (17) Sollbruchstellen (24) beinhaltet und dass mit den Enden der Sollbruchstellen (24) Einrichtungen zur Vernichtung von Bewegungsenergie verbunden sind.

20. Behälter nach einem der Ansprüche 1 bis 19, **dadurch gekennzeichnet, dass** zwischen der versteifungsstruktur (11) und der Aufhängevorrichtung (5) zumindest ein flexibler Gurt od. dgl. angeordnet ist.

21. Behälter nach Anspruch 20, **dadurch gekennzeichnet, dass** der Gurt od. dgl. eine Einrichtung zur Vernichtung von Bewegungsenergie beinhaltet.

## Claims

1. An overhead luggage stowage container (1), particularly for airplanes, including at least one reinforcing structure (11) connected with the container (1) and arranged substantially in the direction of the longitudinal extension of the container (1), and at least one device (5) for suspension from a supporting structure (2) of the airplane or the like, **characterised in that** at least one rigid connection element (17) is each arranged laterally of the container (1) between the reinforcing structure (11) and the suspension device (5) in a manner substantially vertical in respect to the longitudinal extension of the container (1), the connection element (17) being positively connected to the reinforcing structure (11) and the suspension device (5).

2. A container according to claim 1, **characterised in that** the container (1) includes a fixed part (8) and a part movably connected with the same.

3. A container according to claim 2, **characterised in that** the movable container part is comprised of a door (10) articulately connected with the fixed container part (8).

4. A container according to claim 2, **characterised in that** the movable container part is comprised of a luggage-receiving tray (22) that is movably connected with the fixed container part (8).

5. A container according to claim 4, **characterised in that** the tray (22) is pivotally connected with the fixed container part (8) via of a joint (23).

6. A container according to claim 4, **characterised in that** the tray (22) is shiftably connected with the fixed container part (8) via a displacement mechanism.

7. A container according to claim 5 or 6, **characterised in that** the joint (23) or the displacement mechanism, respectively, is connected with the suspension device (5).

8. A container according to claims 5 to 7, **characterised in that** the tray (22) includes at least one reinforcing structure (11), and that at least one rigid connection element (17) is arranged between a reinforcing structure (11) and the joint (23) or displacement mechanism, respectively, in a manner substantially vertical in respect to the longitudinal extension of the container (1).

9. A container according to any one of claims 1 to 8, **characterised in that** at least one carrier arranged in the longitudinal direction of the container (1) and projecting laterally of the container (1) is provided to form said reinforcing structure (11).

10. A container according to claim 9, **characterised in that** the connection element (17) comprises openings (18) for the positive connection with the ends of the reinforcing structure (11) and the suspension devices (5).

11. A container according to any one of claims 1 to 8, **characterised in that** the reinforcing structure (11) is formed by a part of the container (1).

12. A container according to any one of claims 1 to 11, **characterised in that** the connection element (17) comprises holes (19), recesses (20) or the like.

13. A container according to any one of claims 2 to 12, **characterised in that** the connection element (17) is connected, for instance glued or screwed, with side walls (12) of the fixed container part (8), or the movable container part (1) formed by a tray (22).

14. A container according to claim 13, **characterised in that** the side walls (12) are made of fiber-reinforced plastic composites through sandwich construction with cores (15) made of honeycomb materials.

15. A container according to claim 14, **characterised in that** the side walls (12) are glued with the fixed container part (8), or the movable container part formed by a tray (22).

16. A container according to any one of claims 1 to 15, **characterised in that** the connection element (17) and the reinforcing structure (11) are produced in one piece.

17. A container according to any one of claims 1 to 16, **characterised in that** the connection element (17) is made of metal.

18. A container according to any one of claims 1 to 16, **characterised in that** the connection element (17) is made of plastics and, in particular, fiber-reinforced plastics.

19. A container according to any one of claims 1 to 18, **characterised in that** the reinforcing element (17) includes predetermined breaking points (24), and that means for destroying kinetic energy are connected to the ends of the predetermined breaking points (24).

20. A container according to any one of claims 1 to 19, **characterised in that** at least one flexible belt or the like is arranged between the reinforcing structure (11) and the suspension device (5).

21. A container according to claim 20, **characterised in that** the belt or the like includes a means for destroying kinetic energy.

## Revendications

1. Compartiment à bagages en surplomb (1),
notamment pour des avions, comportant au moins une structure de renforcement (11), qui est reliée au compartiment (1) et qui est disposée essentiellement dans la direction de l'étendue longitudinale du compartiment (1), et au moins un dispositif (5) pour la suspension d'une structure porteuse (2) de l'avion ou analogue, **caractérisé en ce qu'**entre la structure de renforcement (11) et le dispositif de suspension (5) est disposé sensiblement verticalement, latéralement par rapport au compartiment (1), respectivement au moins un élément de liaison rigide (17) et ce par rapport à l'étendue longitudinale du compartiment (1), l'élément de liaison (17) étant relié selon une liaison par formes complémentaires à la structure de renforcement (11) et au dispositif de suspension (5).

2. Compartiment selon la revendication 1,
**caractérisé en ce que** le compartiment (1) contient une partie fixe (8) et une partie reliée de façon mobile à cette partie.

3. Compartiment selon la revendication 2,
**caractérisé en ce que** la partie mobile du compartiment est formée par une porte (10) reliée de façon articulée à la partie fixe (8) du compartiment.

4. Compartiment selon la revendication 2,
**caractérisé en ce que** la partie mobile du compartiment est formée par une auge (22) recevant les bagages, laquelle auge (22) est reliée, de manière à être mobile, à la partie fixe (8) du compartiment.

5. Compartiment selon la revendication 4, **caractérisé en ce que** l'auge (22) est reliée de manière à pouvoir pivoter, au moyen d'une articulation (23), à la partie fixe (8) du compartiment.

6. Compartiment selon la revendication 4,
**caractérisé en ce que** l'auge (22) est reliée à la partie fixe (8) du compartiment de manière à être déplaçable au moyen d'un mécanisme de translation.

7. Compartiment selon la revendication 5 ou 6, **caractérisé en ce que** l'articulation (23) ou le mécanisme de translation est relié au dispositif de suspension (5).

8. Compartiment selon les revendications 5 à 7, **caractérisé en ce que** l'auge (22) contient au moins une structure de renforcement (11) et qu'entre une structure de renforcement (11) et l'articulation (23) ou le mécanisme de translation au moins un élément rigide de liaison (17) est disposé sensiblement verticalement par rapport à la l'étendue longitudinale du compartiment (1).

9. Compartiment selon les revendications 1 à 8, **caractérisé en ce que** pour la formation de la structure de renforcement (11) il est prévu au moins un support qui est disposé dans la direction longitudinal du compartiment (1) et fait saillie latéralement par rapport au compartiment (1).

10. Compartiment selon la revendication 9, **caractérisé en ce que** l'élément de liaison (17) comporte des ouvertures (18) servant à établir une liaison par formes complémentaires avec les extrémités de la structure de renforcement (11) et les dispositifs de suspension (5).

11. Compartiment selon l'une des revendications 1 à 8, **caractérisé en ce que** la structure de renforcement (11) est formé par une partie du compartiment (1).

12. Compartiment selon l'une des revendications 1 à 11, **caractérisé en ce que** l'élément de liaison (17) comporte des trous (19), des évidements (20) ou analogues.

13. Compartiment selon l'une des revendications 2 à 12, **caractérisé en ce que** l'élément de liaison (17) est relié, par exemple par collage ou vissage, à des parois latérales (12) de la partie fixe (8) du compartiment ou de la partie mobile (1) du compartiment, formée par une auge (22).

14. Compartiment selon la revendication 13, **caractérisé en ce que** les parois latérales (12) sont formées par des matières plastiques composites renforcées par des fibres formant une structure sandwich avec un noyau (15) formé par un matériau en nid d'abeilles.

15. Compartiment selon la revendication 14, **caractérisé en ce que** les parois latérales (12) sont collées à la partie fixe (8) du compartiment ou à la partie mobile du compartiment, formée par une auge (22).

16. Compartiment selon l'une des revendications 1 à 15, **caractérisé en ce que** l'élément de liaison (17) et la structure de renforcement (11) sont fabriqués d'un seul tenant.

17. Compartiment selon l'une des revendications 1 à 16, **caractérisé en ce que** l'élément de liaison (17) est réalisé en un métal.

18. Compartiment selon l'une des revendications 1 à 16, **caractérisé en ce que** l'élément de liaison (17) est réalisé en une matière plastique, notamment en une matière plastique renforcée par des fibres.

19. Compartiment selon l'une des revendications 1 à 18, **caractérisé en ce que** l'élément de renforcement (17) contient des points de rupture de consigne (24) et que des dispositifs pour annuler une énergie de déplacement sont reliés aux extrémités des points de rupture de consigne (24).

20. Compartiment selon l'une des revendications 1 à 19, **caractérisé en ce qu'**une sangle flexible ou analogue est disposée entre la structure de renforcement (11) et le dispositif de suspension (5).

21. Compartiment selon la revendication 20, **caractérisé en ce que** la sangle ou analogue contient un dispositif pour annuler l'énergie de déplacement.
